# EUROPEAN PATENT SPECIFICATION

(11) **EP 2 913 567 B1**
(45) Date of publication and mention of the grant of the patent: **19.10.2016**
(21) Application number: 12889652.9
(22) Date of filing: 06.12.2012
(51) Int. Cl.: F16J 15/44, F04B 39/00, F04D 29/08, F04D 29/10, F16J 15/40, F16J 15/447, F04D 17/12

(54) **SEALING DEVICE AND ROTATING MACHINE**
VERSIEGELUNGSVORRICHTUNG UND DREHMASCHINE
DISPOSITIF D'ÉTANCHÉITÉ, ET MACHINE ROTATIVE

(43) Date of publication of application: 02.09.2015
(73) Proprietor: Mitsubishi Heavy Industries Compressor Corporation, Minato-ku Tokyo 108-0014 (JP)
(72) Inventor: HASHIZUME Kei, Hiroshima-shi Hiroshima 733-8553 (JP)
(74) Representative: Studio Torta S.p.A.
(86) International application number: PCT/JP2012/081618
(87) International publication number: WO 2014/087512

(56) References cited:
- EP-A1- 2 083 200
- WO-A2-2012/129475
- JP-A- S58 191 374
- JP-A- 2001 123 803
- JP-A- 2001 123 803
- JP-A- 2008 101 614
- JP-A- 2008 101 614
- JP-A- 2011 226 559
- JP-A- 2011 226 559
- JP-U- H0 311 178
- JP-U- S63 110 771
- US-A1- 2004 239 040
- US-A1- 2006 237 914
- US-B1- 6 499 742

## Description

### Technical Field

The present invention relates to a sealing device and a rotating machine.

### Background Art

In rotating machines such as turbines, compressors and pumps, a sealing device, which reduces an amount of leakage of a fluid from a clearance between a stationary side and a rotating side between which a differential pressure is present, is typically provided.

As the sealing device, one that is a non-contact type and has high reliability is frequently used. As a representative non-contact type sealing device (hereinafter referred to simply as "non-contact type seal"), a labyrinth-shaped sealing device has been known. However, in the rotating machines equipped with such a non-contact type seal, due to circumferential asymmetrical pressure distribution (hereinafter referred to as "pressure distribution") resulting from a swirl flow (hereinafter referred to simply as "swirl") of a fluid caused by rotation of a rotor, self-excited or forced vibration may occur at the rotor.

Thus, a technique of providing a baffle plate directed in an axis direction at an inlet of the labyrinth-shaped sealing device that is the non-contact type seal, and thereby counteracting a swirl flowing into the sealing device is proposed (e.g., see Patent Literature 1).

Also, a technique of providing an annular chamber in an outer circumference of a seal ring in order to relieve circumferential pressure distribution in a seal and providing a cavity part causing the annular chamber and a clearance between a stationary body and a rotary body (hereinafter referred to as "seal clearance") to communicate with each other at an interval in a circumferential direction is proposed (e.g., see Patent Literature 2).

### Citation List

### Patent Literature

Patent Literature 1
   Japanese Unexamined Patent Application, First Publication No. 2012-140944
Patent Literature 2
   Japanese Unexamined Patent Application, First Publication No. 2012-102831

### Summary of Invention

### Problem to be Solved by the Invention

As a non-contact type seal other than the labyrinth-shaped sealing device, a damper type sealing device (hereinafter referred to simply as "damper seal") is sometimes used from the viewpoint of giving a damping force exceeding a destabilizing force occurring in the rotating machine. The damper seal includes a packet-shaped sealing device, a honeycomb-shaped sealing device, a hole-pattern-shaped sealing device, and so on. These damper seals can reduce a swirl in the sealing device and obtain a high damping force by partitioning a seal clearance between a seal rotary body and a seal stationary body in a circumferential direction and in an axis direction. However, depending on the conditions of use, asymmetrical pressure distribution is caused in the circumferential direction due to the reduced swirl, which fails to obtain a sufficient damping force or greatly changes a load of a journal bearing of a rotor and results in reducing a vibration-resistant force of the rotor. For this reason, it is necessary to set the seal clearance to be wide and to reduce such adverse effects. However, when the seal clearance is set to be wide, there is a possibility that an amount of leakage of the damper seal is increased, which results in reducing performance of the rotating machine.

In addition, if a swirl of a fluid flowing into the damper seal is great, there is a possibility of a situation in which the damping force of the damper seal is reduced and an operation of the rotating machine is unstable. In this case, in order to reduce the swirl upstream from the damper seal, a fin blocking the swirl is generally installed, or a fluid having a higher pressure than a sealing pressure is injected from a radial direction. However, in such techniques, there is a possibility that the swirl is not sufficiently reduced, or that a differential pressure of the seal is increased and an amount of leakage of the seal is increased.

Japanese Application 2011-226559 discloses a sealing device according to the preamble of claim 1.

The present invention has been made in consideration of the above circumstances and an object of the present invention is to provide a sealing device capable of reducing an amount of leakage, reducing a force from a fluid flowing through a seal clearance responsible for shaft vibration, and increasing damping that suppresses the shaft vibration, and a rotating machine equipped with the sealing device.

### [Means for Solving the Problem]

According to a first aspect of the present invention, a sealing device that suppresses a flow of a fluid includes a seal rotary body, and a seal stationary body disposed with a clearance in a radial direction with respect to an outer circumferential surface of the seal rotary body, wherein the fluid flows between the seal rotary body and the seal stationary body. The seal stationary body is formed with a plurality of holes in an inner surface facing the outer circumferential surface of the seal rotary body, and grooves in a circumferential direction of the inner surface. The seal rotary body has first protrusions that protrude toward the grooves.

With this constitution, when the fluid flows along the clearance between the seal stationary body and the seal rotary body from a high pressure side toward a low pressure side, the flow of the fluid is greatly disturbed by the first protrusions and the grooves. Since the disturbance causes great resistance to the flow of the fluid, an amount of leakage of the fluid from the high pressure side to the low pressure side is smaller than that of the seal free of the grooves and the first protrusions, and damping is increased. In addition, due to the disturbance of the flow caused by the first protrusions at the side of the seal rotary body and the grooves at the side of the seal stationary body, an effect of suppressing a swirl in the plurality of holes of the seal stationary body can be increased. For this reason, non-uniformity of a circumferential pressure caused by the swirl is reduced, and an amount of shaft vibration caused by this pressure distribution can be reduced.

According to a second aspect of the present invention,, the grooves in the sealing device of the first aspect may each have an uneven portion configured to disturb the flow of the fluid on at least one of both wall surfaces in a direction of an axis.

Due to the uneven portions formed on the wall surfaces of the grooves, the flow of the fluid can be disturbed, and a part of the swirl can be blocked. Thus, the non-uniformity of the circumferential pressure caused by the swirl can be further reduced.

According to a third aspect of the present invention, the uneven portion in the sealing device of the first or second aspect may be formed by a part of each of the holes which each of the grooves crosses.

The grooves are formed to cross the holes, and thereby the uneven portions can be formed. Thus, in comparison with when recesses and protrusions are formed in the wall surfaces of the grooves by cutting, the uneven portions can be easily formed.

According to a fourth aspect of the present invention, the sealing device of any one of the first to third aspects may include a swirl flow prevention mechanism configured to blow the fluid that flows into the clearance between the outer circumferential surface of the seal rotary body and the seal stationary body in a direction against a swirl included in the fluid.

The fluid flowing into the clearance between the outer circumferential surface of the seal rotary body and the seal stationary body is blown in the direction against the swirl included in the fluid, and thereby the swirl of the fluid flowing into the clearance between the seal stationary body and the seal rotary body can be counteracted.

According to a fifth aspect of the present invention, the swirl flow prevention mechanism of the fourth aspect may include fins that extend toward an outer circumference side of the seal rotary body and passages that lead from outer circumferential portions of the fins to the clearance.

The swirl adjacent to the seal rotary body can be guided to and decelerated at the outer circumference side by the fins, and the fluid can be guided to the clearance between the seal rotary body and the seal stationary body via the passages and disturb the flow. An amount of the swirl included in the fluid flowing into the clearance can be reduced.

According to a sixth aspect of the present invention, the fins of the swirl flow prevention mechanism of the fourth or fifth aspect may be configured to be inclined in a direction in which a swirl flow is scooped up with respect to the radial direction of the seal rotary body.

A greater swirl can be guided to and decelerated at the outer circumference side by the fins, and the fluid can be guided to the clearance between the seal rotary body and the seal stationary body via the passages and disturb the flow. The amount of the swirl included in the fluid flowing to the clearance can be reduced.

According to a seventh aspect of the present invention, the swirl flow prevention mechanism of the fifth or sixth aspect may include a cover portion covering the outer circumferential portions of the fins.

A pressure of the fluid guided by the fins is recovered by the cover portion, and thereby an amount of the fluid flowing into the passages can be increased.

According to a eighth aspect of the present invention, the swirl flow prevention mechanism of any one of the fifth to seventh aspects may include a non-contact seal between Openings of the passages at a side of the clearance and the fins in the direction of the axis.

The fluid with the swirl is prevented from flowing into the sealing device in a large quantity, and the fluid flowing in the direction against the swirl can be configured to mainly flow downstream from the non-contact seal. Also, the non-contact seal is provided, and thereby when the fluid having a higher pressure than the fluid upstream from the seal is used for the fluid flowing against the swirl, the fluid flowing against the swirl can be prevented from flowing upstream.

According to a ninth aspect of the present invention, the non-contact seal of the eighth aspect may have damping holes in the inner surface facing the outer circumferential surface of the seal rotary body.

The swirl included in the fluid flowing into the clearance from the high pressure side can be reduced between the fins and the openings of the passages at the side of the clearance by the damping holes.

According to a tenth aspect of the present invention, the sealing device of any one of the first to ninth aspects may include a second protrusion, which disturbs the flow of the fluid before the fluid flows into the clearance, at a higher pressure side than the seal stationary body on the outer circumferential surface of the seal rotary body.

Since the flow of the fluid flowing into the clearance can be disturbed at the second protrusion, the amount of the swirl of the fluid can be suppressed. In addition, when the swirl flow prevention mechanism is provided at the high pressure side of the seal stationary body, the fluid disturbing the flow at the second protrusion is supplied to the swirl flow prevention mechanism, and can be effectively used as the fluid blown by the swirl flow prevention mechanism.

In an eleventh aspect of the sealing device according to the present invention, the seal stationary body in the sealing device of any one of the first to tenth aspects may include narrow passages that communicate with the holes and has a narrower flow passage area than the holes, and annular passages with which some of the narrow passages communicate and which are disposed on an outer circumference side of the holes.

Even if a pressure difference is generated in the circumferential direction of the seal rotary body by the swirl, the fluid from the narrow passages in which the pressure is relatively high flows into the annular passages, and the fluid flows out to places in which the pressure is relatively low via the narrow passages in which the pressure is relatively low. Thus, the pressure difference can be reduced. As a result, shaft vibration generated by the pressure difference is reduced. Also, since resistance when the fluid flows into and out of the narrow passages acts as damping, it is possible to reduce the shaft vibration along with the damping of a damping seal.

A rotating machine according to the present invention includes the sealing device of any one of the first to eleventh aspects.

Since the shaft vibration can be reduced while reducing an amount of leakage of the fluid, running performance can be improved.

### [Effects of the Invention]

According to the sealing device and the rotating machine relating to the above aspects of the present invention, the flow of the fluid flowing through the seal clearance is greatly disturbed, and the amount of the swirl is reduced. Thereby, it is possible to reduce the amount of leakage, to reduce the force from the fluid flowing through the seal clearance responsible for the shaft vibration, and to increase the damping that suppresses the shaft vibration.

### Brief Description of Drawings

Fig. 1 is a front view illustrating a centrifugal compressor that is a rotating machine in an embodiment of the present invention.
Fig. 2 is a perspective view illustrating a partial cross section of a seal stationary body in the same embodiment.
Fig. 3 is a sectional view of a sealing device in the same embodiment.
Fig. 4 is a development view illustrating arrangement of holes in the same embodiment.
Fig. 5 is an enlarged sectional view of the vicinity of a groove in the same embodiment.
Fig. 6 is a sectional view taken along line A-A of Fig. 5 in the same embodiment.
Fig. 7 is a view of a swirl flow prevention mechanism viewed from a high pressure side in a direction of an axis in the same embodiment.
Fig. 8 is a view corresponding to Fig. 7 in a first modification of the same embodiment.
Fig. 9 is a view corresponding to Fig. 6 in a second modification of the same embodiment.
Fig. 10 is an enlarged view of the swirl flow prevention mechanism in a third modification of the same embodiment.

### Description of Embodiments

Hereinafter, a sealing device and a rotating machine according to an embodiment of the present invention will be described.

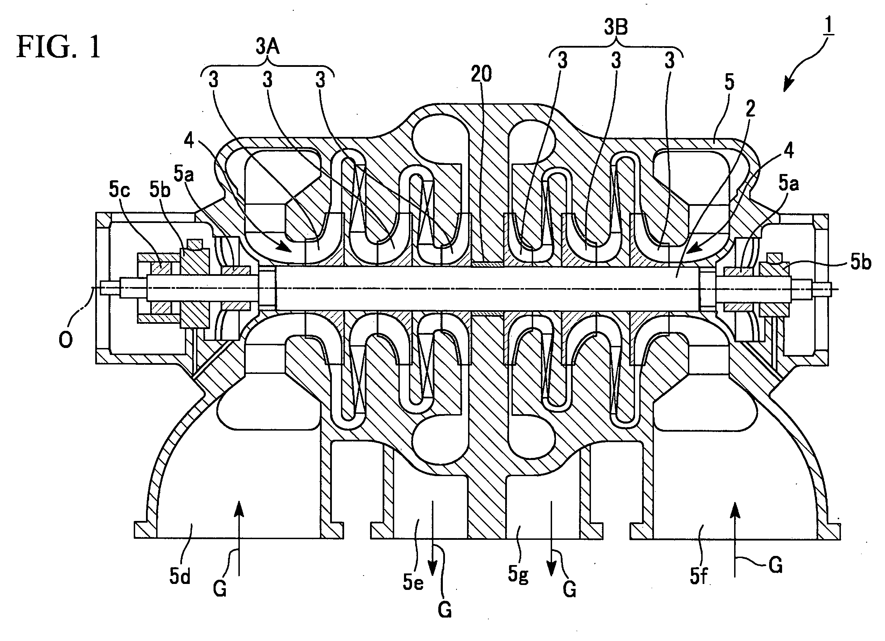

Fig. 1 illustrates a centrifugal compressor 1 that is the rotating machine of the present embodiment.

The centrifugal compressor 1 is equipped with a rotating shaft 2 rotating about an axis O. Multiple impellers 3 compressing a process gas (fluid) G using a centrifugal force are mounted on the rotating shaft 2. Also, the centrifugal compressor 1 is equipped with a casing 5 having a flow passage 4 causing the process gas G to flow from a low pressure side to a high pressure side.

Each end of the casing 5 in a direction of the axis O is provided with a shaft sealing device 5a, a journal bearing 5b, and a thrust bearing 5c. Both ends of the rotating shaft 2 are rotatably supported on the casing 5 by the journal bearings 5b.

Impellers 3 of the centrifugal compressor 1 in the present embodiment constitute two impeller groups 3A and 3B whose blades turn to sides opposite to each other in the direction of the axis O of the rotating shaft 2. When the rotating shaft 2 is rotatably driven, the impeller group 3A and the impeller group 3B compress the process gas G from suction ports 5d and 5f toward discharge ports 5e and 5g, respectively, while causing the process gas G to flow.

That is, the centrifugal compressor 1 causes the process gas G suctioned from the suction port 5d to flow into the flow passage 4 in the impeller group 3A, and compresses the process gas G while causing the process gas G to flow from a first stage of the impeller group 3A to a third stage. The process gas G compressed by flowing to the third stage of the impeller group 3A is discharged from the discharge port 5e. The process gas G discharged from the discharge port 5e is sent to the suction port 5f through a pipeline (not shown) connected from the discharge ports 5e to the suction port 5f.

Subsequently, the centrifugal compressor 1 causes the process gas G suctioned from the suction port 5f to flow into the flow passage 4 in the impeller group 3B, and further compresses the process gas G while causing the process gas G to flow from a first stage of the impeller group 3B to a final stage. The process gas G compressed by flowing to the final stage of the impeller group 3B is discharged from the discharge port 5g.

In comparison with the process gas G adjacent to the discharge port 5e of the impeller group 3A, the process gas G adjacent to the discharge port 5g of the aforementioned impeller group 3B has a high pressure in proportion to the extent to which it is compressed by the impeller group 3B. That is, a pressure difference occurs between the process gas G present in the around of the rotating shaft 2 at the side of the discharge port 5e in the direction of the axis O and the process gas G present in the around of the rotating shaft 2 at the side of the discharge port 5g in the direction of the axis O. For this reason, the sealing device 20, by which the high pressure side and the low pressure side are sectioned off in the direction of the axis O of the rotating shaft 2 and which reduces an amount of leakage of the process gas G while allowing of the rotation of the rotating shaft 2, is provided between the final stages of the impellers 3 of the impeller groups 3A and 3B.

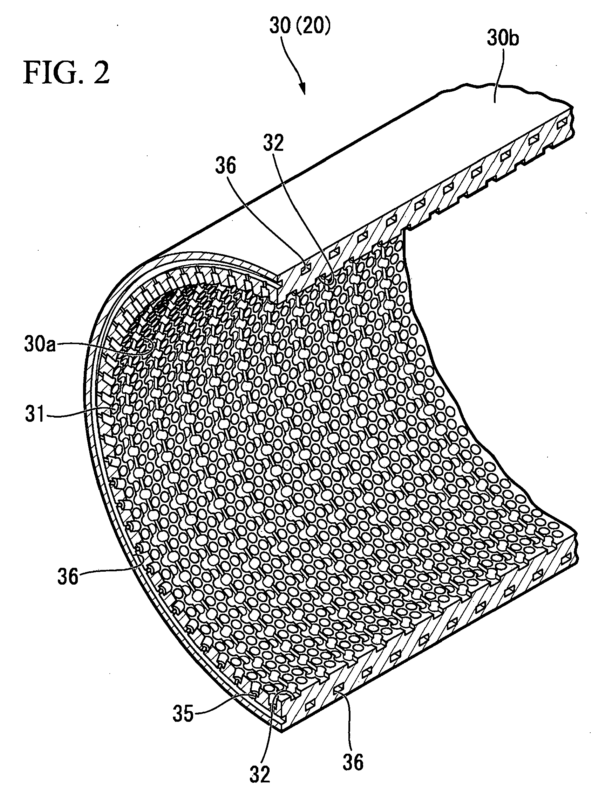

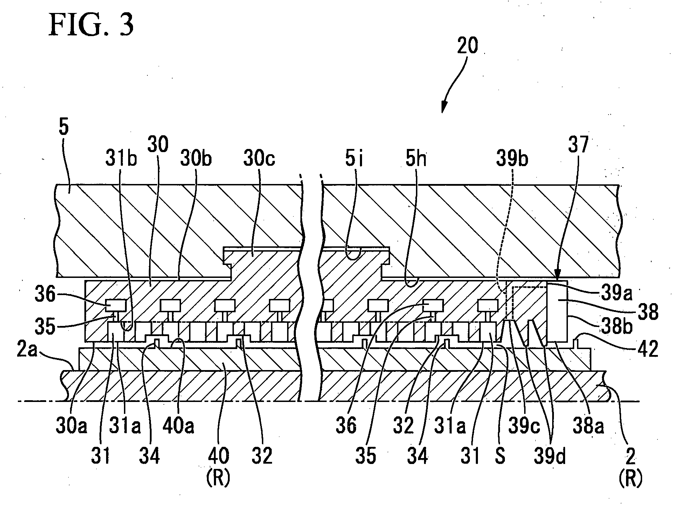

Fig. 2 is a perspective view illustrating a partial cross section of a seal stationary body 30 constituting the sealing device 20. Also, Fig. 3 is a meridian sectional view of an upper portion of the sealing device 20.

As illustrated in Fig. 3, a seal rotary body 40 that is an approximately annular sleeve is fixed to the rotating shaft 2 so as to cover an outer circumferential surface of the rotating shaft 2.

On the other hand, the seal stationary body 30 having an approximately annular shape is mounted on an inner circumferential surface 5h of the casing 5 which faces the outer circumferential surface 2a of the rotating shaft 2 with a clearance from an outer circumferential surface 40a of the seal rotary body 40 in a radial direction. The seal stationary body 30 is fixed, for instance, in such a manner that an engagement protrusion 30c thereof is engaged with an engagement recess 5i formed in an inner circumferential surface of, for instance, the casing 5 or a partition plate (not shown).

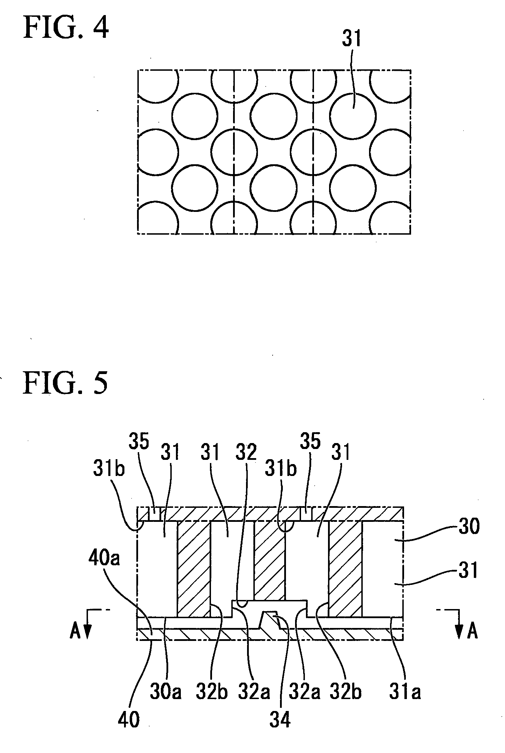

As illustrated in Figs. 2 and 3, the seal stationary body 30 is a so-called damping seal ring having a hole pattern, and an inner circumferential surface 30a thereof is formed with a plurality of holes 31 that are open toward a radial inner side in a circular shape. Openings 31a of these holes 31 are disposed at predetermined intervals from each other in a zigzag pattern. Here, the basic arrangement of the holes 31 in the inner circumferential surface 30a of the seal stationary body 30 is shown in Fig. 4. In Fig. 4, a leftward/rightward direction is equivalent to the direction of the axis O of the seal stationary body 30, and an upward/downward direction is equivalent to the circumferential direction of the seal stationary body 30. Note that, in Fig. 4, positions at which grooves 32 to be described below are formed are shown by a line composed of alternating long and short dashes.

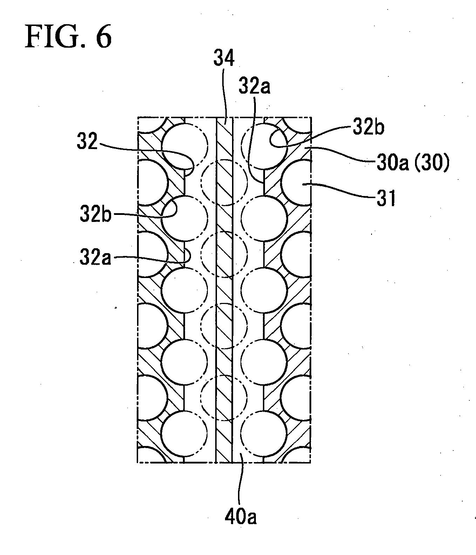

As illustrated in Figs. 2, 3, 5 and 6, the inner circumferential surface 30a of the seal stationary body 30 is formed with annular grooves 32 having a predetermined width in the direction of the axis O. These grooves 32 are recessed from the inner circumferential surface 30a toward a radial outer side, and are each formed to cross the holes 31 formed in the seal stationary body 30 in the circumferential direction. Thereby, portions recessed toward both outer sides in the direction of the axis O in a circular arc shape in a cross section are intermittently formed in two sidewalls 32a of each groove 32 which face each other in the direction of the axis O, and thereby uneven portions 32b are formed on the sidewalls 32a. In Fig. 6, a leftward/rightward direction is equivalent to the direction of the axis O of the seal stationary body 30, and an upward/downward direction is equivalent to the circumferential direction of the seal stationary body 30.

Here, in the case of the seal stationary body 30 illustrated in Figs. 5 and 6, one example in which the groove 32 is formed with a width dimension with which it passes through the center of each of the holes 31, which adjoin each other in the circumferential direction, in the direction of the axis O has been described. However, the width of each groove 32 is a width greater than an allowable movement amount of the rotating shaft 2 in the direction of the axis O such that each of first protrusions 34 of the seal rotary body to be described below and the sidewalls 32a of each groove 32 do not come into contact with each other, and may be a width dimension that the uneven portions 32b are formed on the sidewalls 32a. Also, the uneven portions 32b have been described as being formed on the sidewalls 32a. However, when the holes 31 are disposed within the width of each groove 32, the openings 31a of the holes 31 are also formed in the bottom of each groove 32.

Each of the first protrusions 34 is formed on the outer circumferential surface 40a of the seal rotary body 40 which faces the inner circumferential surface 30a of the seal stationary body 30 throughout the circumference of the radial outer side so as to protrude toward each groove 32 of the seal stationary body 30. A width dimension of the first protrusion 34 need only be necessary and sufficient in view of strength, and a height of the first protrusion 34 may also be a height (e.g., similar to or somewhat higher than the seal clearance S) required to disturb the flow of the fluid leaking from the seal clearance.

As illustrated in Figs. 2 and 3, narrow passages 35 are connected to each predetermined number of holes 31 in the seal stationary body 30 among the holes 31 arranged in the direction of the axis O. The narrow passages 35 extend from the bottoms 31b of the holes 31 to the radial outer side, and are formed to have circumferential cross sections (in other words, flow passage areas) smaller than those of the holes 31. Here, the circumferential cross sections of the narrow passages 35 have an adequate size in consideration of the conditions of use. Further, annular passages 36 are formed at the radial outer side (outer circumference side) of the narrow passages 35 throughout the circumference of the seal stationary body 30. The plurality of narrow passages 35 aligned in the circumferential direction are connected to the annular passages 36 from the radial inner side. In this way, the narrow passages 35 and the annular passages 36 are connected, and thereby internal flow passages of the holes 31 and the annular passages 36 communicate with each other via the narrow passages 35.

Here, the narrow passages 35 and the annular passages 36 may, for instance, be formed by forming the annular passages 36, the narrow passages 35, and the holes 31 with separate parts and coupling the parts to each other.

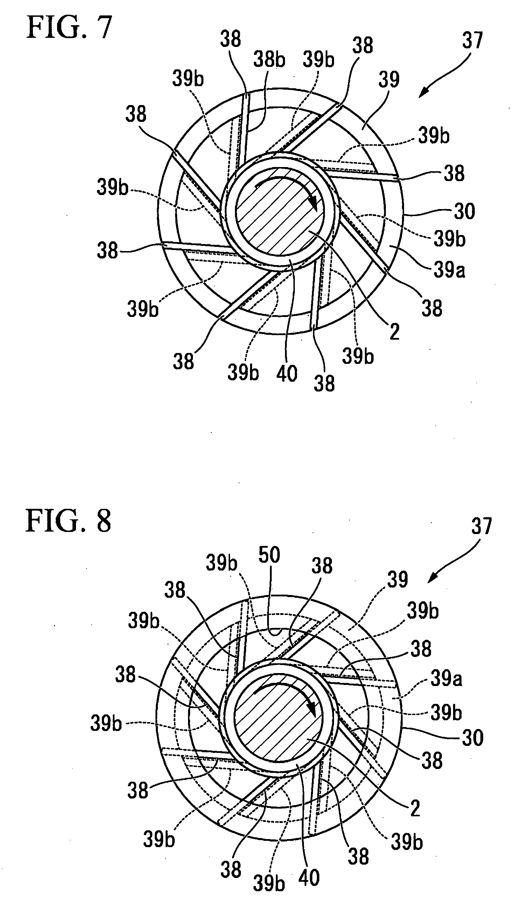

As illustrated in Figs. 3 and 7, the seal stationary body 30 is provided with a swirl flow prevention mechanism 37 at the high pressure side thereof. With respect to the process gas G that flows into the seal clearance S between the outer circumferential surface 40a of the seal rotary body 40 mounted on the rotating shaft and the inner circumferential surface 30a of the seal stationary body 30, the swirl flow prevention mechanism 37 blows the process gas G in a direction against a swirl (swirl flow). Here, the direction against the swirl is any direction between the radial direction and the circumferential direction that becomes a direction opposite to the direction of rotation.

The swirl flow prevention mechanism 37 is equipped with a plurality of fins 38 in approximately rectangular plate shapes. These fins 38 are obliquely provided such that short sides 38a thereof are directed in the direction of the axis O and long sides 38b scoop up the swirl in a swirling direction of the process gas G rather than the radial direction. Further, the swirl flow prevention mechanism 37 is equipped with openings 39a at a radial outer portion (outer circumferential portion) of the low pressure side relative to the fins 38. Radial outer ends of blowoff passages 39b that extend toward the radial inner side after being directed in the direction of the axis O are connected to these openings 39a. The radial inner ends of these blowoff passages 39b face the seal clearance S between the inner circumferential surface 30a of the seal stationary body 30 and the outer circumferential surface 40a of the seal rotary body 40 and are connected to openings 39c directed in the direction against the swirl.

A second protrusion 42 is formed on the outer circumferential surface 40a of the seal rotary body 40 mounted on the rotating shaft 2 at a position that becomes a higher pressure side than the seal stationary body 30 in the direction of the axis O in order to disturb the flow of the process gas G. To be more specific, the second protrusion 42 is disposed adjacent to the fins 38. The second protrusion 42 is continuously formed in the circumferential direction, and has a height that is at least equal to a distance between the short side 38a of the inner circumferential side of each fm 38 and the outer circumferential surface 40a of the seal rotary body 40.

Also, a portion of the process gas G that disturbs the flow by providing the second protrusion 42 can be caused to flow along the aforementioned fins 38 toward the radial outer side. Generally, the swirl included in the process gas G generated by the rotary body such as the rotating shaft 2 or the impeller 3 is enlarged in the vicinity of the rotary body. Also, the swirl is reduced in the vicinity of the stationary body due to a frictional loss of a wall surface of the stationary body. That is, it is possible to guide most of the swirl adjacent to the rotating shaft 2 to the vicinity of the stationary body disposed at the radial outer side of the rotating shaft 2 by the fins 38, and the swirl can be decelerated. Thereby, an amount of the swirl of the process gas G flowing into the seal clearance S can also be reduced.

Labyrinth fins 39d protrude from the inner circumferential surface 30a of the seal stationary body 30 toward the radial inner side between the fins 38 and the openings 39c in the direction of the axis O. The labyrinth fins 39d are continuously formed in the circumferential direction of the inner circumferential surface 30a of the seal stationary body 30. Due to the labyrinth fins 39d, the seal clearance S between the inner circumferential surface 30a of the seal stationary body 30 and the outer circumferential surface 40a of the seal rotary body 40 is partly narrowed. Thereby, an amount of the process gas flowing into the seal clearance S is reduced, and a pressure difference between high and low pressure sides of the labyrinth fins 39d is maintained. A pressure of the low pressure side becomes a pressure at which an amount of leakage of the damping seal (the seal stationary body 30 and the seal rotary body 40) downstream from the blowoff passages 39b and the labyrinth fins 39d balances an amount of leakage of the labyrinth fins 39d and an amount of blowoff from the blowoff passages 39b. That is, the process gas G is set to be blown off from the blowoff passages 39b to the low pressure side of the labyrinth fins 39d using a pressure difference between a static pressure of the process gas G of an outer diameter portion of the aforementioned fins 38 and a pressure of the low pressure side of the aforementioned fins 38. Here, at the radial outer side of the fins 38, as in a first modification illustrated in Fig. 8, an annular cover part 50 may be mounted to cover the radial outer portion of the fins 38 from the high pressure side. Thereby, a flow rate of the process gas G flowing into the blowoff passages 39b can be slightly increased using dynamic pressure recovery of the swirl.

Therefore, according to the sealing device 20 of the aforementioned embodiment, when the process gas G flows along the seal clearance S between the seal stationary body 30 and the seal rotary body 40 from the high pressure side toward the low pressure side, the flow in the direction of the axis O and the circumferential direction is greatly disturbed together by the first protrusions 34, the grooves 32, and the holes 31. For this reason, the flow causes great resistance to the flow of the process gas G, and suppresses the swirl of the process gas G flowing along the seal clearance S, and it is possible to reduce the amount of leakage and increase the damping.

Also, due to the disturbance of the flow caused by the first protrusions 34 at the side of the seal rotary body 40 and the grooves 32 at the side of the seal stationary body 30, an effect of suppressing the swirl in the plurality of holes 31 of the seal stationary body 30 can be increased. For this reason, non-uniformity of the circumferential pressure caused by the swirl is reduced, and an amount of shaft vibration caused by this pressure distribution can be reduced.

In addition, due to the uneven portions 32b formed on the sidewalls 32a of each groove 32 of the seal stationary body 30, the flow can be further disturbed, and a part of the swirl can be blocked. Thus, the suppression of the swirl, the reduction of the amount of leakage, and the increase of the damping can be further achieved at the seal stationary body 30.

Further, the grooves 32 are formed to cross the holes 31, and thereby the uneven portions 32b can be formed on the sidewalls 32a of each groove 32. Thus, in comparison with when the uneven portions 32b are formed on planar sidewalls 32a of each groove 32 by cutting or, the uneven portions 32b can be easily formed.

Also, the process gas G is blown against the process gas G flowing into the seal clearance S in the direction against the swirl by the swirl flow prevention mechanism 37, and thereby the amount of the swirl can be reduced. Thus, flowing of the swirl of the process gas G flowing into the seal clearance S between the seal stationary body 30 and the seal rotary body 40 can be counteracted.

Also, the swirl of the vicinity of the seal rotary body 40 can be guided to the outer circumference side and decelerated by the fins 38 of the swirl flow prevention mechanism 37, the process gas G is guided to the seal clearance S via the blowoff passages 39b and disturbs the flow, and the amount of the swirl included in the process gas G flowing to the seal clearance S can be reduced.

Further, the fins 38 are inclined in the direction in which they scoop up the swirl with respect to the radial direction. Thereby, a greater swirl can be guided to the outer circumference side and decelerated by the fins 38.

Also, the labyrinth fins 39d are provided in the direction of the axis O between the openings 39c of the blowoff passages 39b which are at the side of the seal clearance S and the fins 38. Thereby, the process gas G with the swirl can be prevented from flowing into the seal clearance S in a large quantity, and the process gas G flowing in the direction against the swirl can be made to mainly flow downstream from the labyrinth fins 39d. In addition, the labyrinth fins 39d are provided. Thereby, when a process gas G having a higher pressure than a fluid pressure upstream from the seal is used for the process gas G flowing against the swirl, the process gas G flowing against the swirl can be prevented from flowing upstream.

Further, since the flow of the process gas G flowing into the seal clearance S can be disturbed by the second protrusion 42, the amount of the swirl of the process gas G can be suppressed. Also, when the swirl flow prevention mechanism 37 is provided at the high pressure side of the seal stationary body 30, the process gas G whose flow is disturbed by the second protrusion 42 is supplied to the swirl flow prevention mechanism 37, and can be effectively used as the process gas G blown by the swirl flow prevention mechanism 37.

Further, even if a pressure difference is generated in the circumferential direction of the seal clearance S by the suppressed swirl, the process gas G from the narrow passages 35 in which the pressure is relatively high flows into the annular passages 36, and the process gas G can be supplied to places in which the pressure is relatively low via the narrow passages 35 in which the pressure is relatively low. As a result, a pressure difference at the seal clearance S around the rotating shaft 2 is reduced, and a force acting on the rotating shaft 2 is reduced by the pressure difference. Thus, it is possible to prevent an increase in vibration resulting from the force acting on the rotating shaft 2.

Also, according to the centrifugal compressor 1 of this embodiment, it is possible to suppress the swirl of the process gas G, reduce the amount of leakage, and increase the damping, and thus it is possible to improve running performance.

The present invention is not limited to the aforementioned embodiment, and includes various ways of modifying the aforementioned embodiment without departing from the spirit and scope of the present invention. That is, the specific shape and constitution represented in the embodiment are merely examples and can be appropriately modified.

For example, in the aforementioned embodiment, one example in which one sealing device 20 is provided in the direction of the axis O has been described. However, for example, the sealing device 20 may be divided and installed in the direction of the axis O. Also, the sealing device 20 may be installed at multiple places in the centrifugal compressor 1 that is the rotating machine.

Also, the case in which the seal rotary body 40 on which the first protrusions 34 are formed and which has a circular pipe is mounted on the rotating shaft 2 has been described. However, the first protrusions 34 may be formed on the outer circumferential surface 2a of the rotating shaft 2, and the rotating shaft 2 may be used as the seal rotary body.

Further, in the aforementioned embodiment, the case in which the holes 31 of the seal stationary body 30 are arranged in the zigzag shape has been described. However, the arrangement of the holes 31 is not limited to the zigzag shape, and may be, for instance, a square arrangement.

Further, in the aforementioned embodiment, the seal stationary body 30 having the hole pattern shape has been described by way of example. However, the present invention is not limited to the seal stationary body 30 having the above shape. The seal stationary body 30 may be a seal stationary body that has holes demarcated in the circumferential direction and in the direction of the axis O and can apply a damping force, and may be a seal stationary body having a pocket shape or a honeycomb shape. Even when the seal stationary body having the pocket shape or the honeycomb shape is used, similar to the seal stationary body 30 having the hole pattern shape, the grooves 32 are formed in the circumferential direction of the seal stationary body and are formed to cross the holes 31. Thereby, the uneven portions 32b can be formed on the sidewalls 32a.

Further, in the aforementioned embodiment, the case in which the uneven portions 32b are formed on both of the sidewalls 32a in the direction of the axis O of each groove 32 has been described. However, the uneven portions 32b may be formed on any one of the sidewalls 32a.

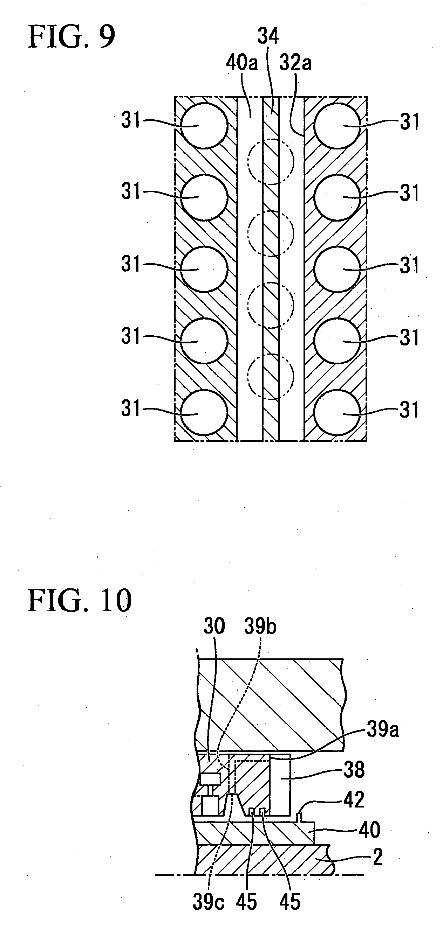

Further, as in a second modification illustrated in Fig. 9, the uneven portions 32b formed on the sidewalls 32a of each groove 32 may be omitted. Even in this case, the flow of the process gas G is disturbed by the grooves 32, the first protrusions 34, and the holes 31, and the swirl included in the process gas G can be reduced.

Also, in the aforementioned embodiment, the case in which the swirl flow prevention mechanism 37 is provided at the high pressure side relative to the seal stationary body 30 has been described. However, the swirl flow prevention mechanism 37 may be provided at an intermediate portion of the seal stationary body 30. Also, the swirl flow prevention mechanism 37 may be provided or omitted according to necessity. Similarly, in the aforementioned embodiment, the case in which the narrow passages 35 and the annular passages 36 are formed has been described. However, the narrow passages 35 and the annular passages 36 may be omitted when the swirl caused by the rotation of, for instance, the rotating shaft 2 is reduced.

Further, in the aforementioned embodiment, the case in which the recessed portions are formed in a circular arc shape in a cross section by cutting the holes 31 and the uneven portions 32b are formed on the sidewalls 32a of each groove 32 has been described. However, the uneven portions 32b may be adapted to be formed on the sidewalls 32a of each groove 32 by methods other than cutting. For example, a process of recessing the sidewalls 32a of each groove 32 in the direction of the axis O may be performed, or a process of protruding inward from the sidewalls 32a of each groove 32 in the direction of the axis O may be performed.

Also, in the aforementioned embodiment, the case in which the holes 31 are also formed in the bottoms of the grooves 32 facing the first protrusions 34 has been described, but the holes 31 are not necessarily provided. Also, the number of holes 31 formed in the bottoms of the grooves 32 need only be set to a proper number corresponding to desired seal performance, and may, for example, be smaller than the number of holes 31 of the seal stationary body 30 other than the grooves 32 in the circumferential direction.

Also, the case in which the second protrusion 42 is provided at the high pressure side of the swirl flow prevention mechanism 37 has been described. However, the second protrusion 42 may be omitted according to a state of the swirl at the high pressure side of the sealing device 20.

Further, as in a third modification illustrated in Fig. 10, the swirl flow prevention mechanism 37 may have a plurality of damping holes 45 formed in an inner surface facing the outer circumferential surface of the seal rotary body between the openings 39c of the blowoff passages (paths) 39b which are at the side of the seal clearance S and the fins 38 in the direction of the axis O. The damping holes 45 have the same constitution as the aforementioned holes 31. The swirl included in the process gas G flowing from the high pressure side into the seal clearance S between the fins 38 and the openings 39c of the blowoff passages 39b which are at the side of the seal clearance S can be reduced by the damping holes 45. The number of rows of the damping holes 45 in the direction of the axis O is not limited to that of Fig. 10, and the damping holes 45 may be formed in at least one row. Also, in place of the fins 38, i.e. the labyrinth fins 39d between the openings 39c and the fins 38, another non-contact seal (for instance, a pocket-shaped or honeycomb-shaped non-contact seal) may be used.

### [Industrial Applicability]

The present invention may be applied as a sealing device that reduces a flow of a fluid on an outer circumferential surface of a rotary body in a direction of an axis or a sealing device that adds damping in order to improve a vibration-resistant force of a rotor. In addition, the present invention may be applied to a rotating machine equipped with the sealing device.

### Reference Signs List

2: rotating shaft
2a: outer circumferential surface
20: sealing device
31: hole
30: seal stationary body
32: groove
32a: sidewall (wall surface)
32b: uneven portion
34: first protrusion
35: narrow passage
36: annular passage
37: swirl flow prevention mechanism
40: seal rotary body
42: second protrusion
G: process gas (fluid)
S: seal clearance

## Claims

1. A sealing device that suppresses a flow of a fluid, the sealing device comprises:
a seal rotary body (2), a seal stationary body (30) disposed with a clearance (S) in a radial direction with respect to an outer circumferential surface (2a) of the seal rotary body, wherein:
the fluid flows between the seal rotary body (2) and the seal stationary body (30),
the seal stationary body is formed with a plurality of holes (31) in an inner surface (30a) facing the outer circumferential surface of the seal rotary body,
whereby:
the seal stationary body is also formed with a plurality of grooves (32) in a circumferential direction of the inner surface,
the seal rotary body has first protrusions (34) that protrude toward the grooves (32),
the grooves each have an uneven portion (32b) configured to disturb the flow of the fluid on at least one of both wall surfaces (32a) in a direction of an axis, **characterized in that** said sealing device further comprises a swirl flow prevention mechanism (37) configured to blow the fluid that flows into the clearance between the outer circumferential surface of the seal rotary body and the seal stationary body in a direction against a swirl included in the fluid; and **in that** the swirl flow prevention mechanism includes fins (38) that extend toward an outer circumference side of the seal rotary body and passages (39b) that lead from outer circumferential portions of the fins to the clearance (S).

2. The sealing device according to claim 1, wherein the uneven portion is formed by a part of each of the holes which each of the grooves crosses.

3. The sealing device according to claim 1, wherein the fins are inclined in a direction in which a swirl flow is scooped up with respect to the radial direction of the seal rotary body.

4. The sealing device according to claim 1 or 3, wherein the swirl flow prevention mechanism includes a cover portion covering the outer circumferential portions of the fins.

5. The sealing device according to any one of claims 1,3, and 4, wherein the swirl flow prevention mechanism includes a non-contact seal between openings of the passages at a side of the clearance and the fins in the direction of the axis.

6. The sealing device according to claim 5, wherein the non-contact seal has damping holes in the inner surface facing the outer circumferential surface of the seal rotary body.

7. The sealing device according to any one of claims 1 to 6, comprising a second protrusion, which disturbs the flow of the fluid before the fluid flows into the clearance, at a higher pressure side than the seal stationary body on the outer circumferential surface of the seal rotary body.

8. The sealing device according to any one of claims 1 to 7, wherein the seal stationary body includes narrow passages that communicate with the holes and has a narrower flow passage area than the holes, and annular passages with which some of the narrow passages communicate and which are disposed on an outer circumference side of the holes.

9. A rotating machine having the sealing device according to any one of claims 1 to 8.

## Patentansprüche

1. Dichtungsvorrichtung, die eine Fluid-Strömung unterbindet, wobei die Dichtungsvorrichtung umfasst:
einen rotierbaren Dichtungskörper (2), einen stationären Dichtungskörper (30), der mit einem Freiraum (S) in radialer Richtung relativ zur äußeren Umfangsfläche (2a) des rotierbaren Dichtungskörpers angeordnet ist, wobei
das Fluid zwischen dem rotierbaren Dichtungskörper (2) und dem stationären Dichtungskörper (30) fließt,
im stationären Dichtungskörper eine Vielzahl von Löchern (31) in einer inneren Oberfläche (30a), die der äußeren Umfangsfläche des rotierbaren Dichtungskörpers zugewandt ist, ausgebildet ist,
wobei der stationäre Dichtungskörper auch mit einer Vielzahl von Rillen (32) in einer Umfangsrichtung der inneren Oberfläche versehen ist,
der rotierbare Dichtungskörper erste Vorsprünge (34) aufweist, die in die Rillen (32) ragen,
die Rillen jeweils einen unebenen Bereich (32b) aufweisen, der dafür ausgebildet ist, die Strömung des Fluids an mindestens einer der beiden Wandflächen (32a) in Richtung einer Achse zu stören, **dadurch gekennzeichnet, dass** die genannte Dichtungsvorrichtung außerdem über einen Wirbelströmungsverhütungsmechanismus (37) verfügt, dafür konfiguriert, das Fluid, das in den Freiraum zwischen der äußeren Umfangsfläche des rotierbaren Dichtungskörpers und dem stationären Dichtungskörper in einer Richtung gegen einen im Fluid auftretenden Wirbel zu blasen, und, dass der genannte Wirbelströmungsverhütungsmechanismus Rippen (38), die zu einer Außenumfangsseite des rotierbaren Dichtungskörpers hin verlaufen, und Durchgänge (39b), die von Außenumfangsbereichen der Rippen in den Freiraum (S) führen, umfasst.

2. Dichtungsvorrichtung nach Patentanspruch 1, in der der unebene Bereich durch einen Teil jedes der Löcher gebildet wird, das jede der Rillen kreuzt.

3. Dichtungsvorrichtung nach Patentanspruch 1, in der die Rippen in eine Richtung geneigt sind, in die eine Wirbelströmung relativ zur Radiusrichtung des rotierbaren Dichtungskörpers angehoben wird.

4. Dichtungsvorrichtung nach Patentanspruch 1 oder 3, in der der Wirbelströmungsverhütungsmechanismus einen Abdeckbereich aufweist, der die Außenumfangsbereiche der Rippen abdeckt.

5. Dichtungsvorrichtung nach irgendeinem der Patentansprüche 1, 3 und 4, in der der Wirbelströmungsverhütungsmechanismus eine berührungsfreie Dichtung zwischen Mündungen der Durchgänge an einer Seite des Freiraumes und den Rippen in Richtung der Achse umfasst.

6. Dichtungsvorrichtung nach Patentanspruch 5, in der die berührungsfreie Dichtung über Dämpfungslöcher in der inneren Oberfläche verfügt, die der Außenumfangsfläche des rotierbaren Dichtungskörpers zugewandt ist.

7. Dichtungsvorrichtung nach irgendeinem der Patentansprüche 1 bis 6, einen zweiten Vorsprung umfassend, der die Strömung des Fluids stört, bevor das Fluid in den Freiraum fließt, an einer Seite mit höherem Druck als der stationären Dichtungskörper an der Außenumfangsfläche des rotierbaren Dichtungskörpers.

8. Dichtungsvorrichtung nach irgendeinem der Patentansprüche 1 bis 7, in der der stationäre Dichtungskörper enge Durchgänge aufweist, die mit den Löchern in Verbindung stehen, und eine engere Durchflussfläche aufweist, als die Löcher, und ringförmige Durchgänge, mit denen einige der engen Durchgänge in Verbindung stehen und die an einer Außenumfangsseite der Löcher angeordnet sind.

9. Eine rotierende Maschine, die über die Dichtungsvorrichtung nach irgendeinem der Patentansprüche 1 bis 8 verfügt.

## Revendications

1. Dispositif d'étanchéité qui supprime un écoulement de fluide, le dispositif d'étanchéité comprenant :
un corps rotatif de joint (2), un corps fixe de joint (30) disposé, avec jeu (S), dans une direction radiale par rapport à une surface circonférentielle externe (2a) du corps rotatif de joint :
le fluide s'écoulant entre le corps rotatif de joint (2) et le corps fixe de joint (30),
le corps fixe de joint étant doté d'une pluralité de trous (31) dans une surface interne (30a) tournée vers la surface circonférentielle externe du corps rotatif de joint, grâce à quoi :
le corps fixe de joint est également doté d'une pluralité de rainures (32) dans une direction circonférentielle de la surface interne,
le corps rotatif de joint comporte des premières protubérances (34) qui font saillie vers les rainures (32),
les rainures comportent chacune une partie irrégulière (32b) configurée de manière à perturber l'écoulement du fluide sur au moins l'une des deux surfaces de paroi (32a) dans une direction d'un axe, **caractérisé en ce que** ledit dispositif d'étanchéité comprend, en outre, un mécanisme anti-écoulement tourbillonnaire (37) configuré pour souffler sur le fluide qui s'écoule dans le jeu entre la surface circonférentielle externe du corps rotatif de joint et du corps fixe de joint dans une direction à l'encontre d'un tourbillon inclus dans le fluide ; et **en ce que** le mécanisme anti-écoulement tourbillonnaire comprend des ailettes (38) qui s'étendent vers un côté circonférentiel externe du corps rotatif de joint et des passages (39b) qui vont des parties circonférentielles externes des ailettes jusqu'au jeu (S).

2. Dispositif d'étanchéité selon la revendication 1, dans lequel la partie irrégulière est formée par une portion de chacun des trous que croise chacune des rainures.

3. Dispositif d'étanchéité selon la revendication 1, dans lequel les ailettes sont inclinées dans une direction dans laquelle un écoulement tourbillonnaire est ramassé par rapport à la direction radiale du corps rotatif de joint.

4. Dispositif d'étanchéité selon la revendication 1 ou 3, dans lequel le mécanisme anti-écoulement tourbillonnaire comprend une partie formant couvercle recouvrant les parties circonférentielles externes des ailettes.

5. Dispositif d'étanchéité selon l'une quelconque des revendications 1, 3 et 4, dans lequel le mécanisme anti-écoulement tourbillonnaire comprend un joint sans contact entre des ouvertures des passages sur un côté du jeu et les ailettes dans la direction de l'axe.

6. Dispositif d'étanchéité selon la revendication 5, dans lequel le joint sans contact comporte des trous d'amortissement dans la surface interne tournée vers la surface circonférentielle externe du corps rotatif de joint.

7. Dispositif d'étanchéité selon l'une quelconque des revendications 1 à 6, comprenant une deuxième protubérance, qui perturbe l'écoulement du fluide avant que le fluide ne s'écoule dans le jeu, sur un côté de pression plus élevée que le corps fixe de joint sur la surface circonférentielle externe du corps rotatif de joint.

8. Dispositif d'étanchéité selon l'une quelconque des revendications 1 à 7, dans lequel le corps fixe de joint comprend des passages étroits qui communiquent avec les trous et comporte une section de passage d'écoulement plus étroite que les trous, et des passages annulaires avec lesquels communiquent certains des passages étroits et qui sont disposés sur un côté circonférentiel externe des trous.

9. Machine rotative comportant le dispositif d'étanchéité selon l'une quelconque des revendications 1 à 8.
